# FASCICULE DE BREVET EUROPEEN

(11) **EP 1 549 874 B1**
(45) Date de publication et mention de la délivrance du brevet: **04.07.2012**
(21) Numéro de dépôt: 03780212.1
(22) Date de dépôt: 10.10.2003
(51) Int. Cl.: F16L 39/04, F16L 59/18

(54) **SYSTEME DE JOINT TOURNANT**
DREHVERBINDUNGSSYSTEM
SWIVEL JOINT SYSTEM

(30) Priorité: 11.10.2002 FR 0212694
(43) Date de publication de la demande: 06.07.2005
(73) Titulaire: Société Européenne d'Ingénierie Mécanique - EURODIM, 92566 Rueil Malmaison (FR)
(72) Inventeur: GHILARDI, Jean-Pierre, F-95680 Montlignon (FR)
(74) Mandataire: Thinat, Michel
(86) Numéro de dépôt international: PCT/FR2003/003005
(87) Numéro de publication internationale: WO 2004/033950

(56) Documents cités:
- EP-A- 0 188 161
- FR-A- 2 539 481

## Description

L'invention concerne un système de joint tournant selon le préambule de la revendication 1.

Un système de ce type est déjà connu par le brevet européen N° 0188161. Dans ce système les deux dispositifs de joints tournants pour le passage du liquide cryogénique et le retour du gaz sont réalisés sous forme de dispositifs indépendants, le conduit destiné au passage du retour de gaz entourant concentriquement la partie de conduit fixe du dispositif de joint pour le passage du liquide cryogénique, avec une couche d'isolation thermique interposée entre les deux conduits concentriques.

Ce système formant joint tournant présente l'inconvénient d'avoir une structure complexe et être encombrant.

La présente invention a pour but de proposer un système de joint tournant qui pallie cet inconvénient.

Pour atteindre ce but, le système formant joint tournant selon l'invention comporte les caractéristiques qui sont énoncées dans la revendication 1.

D'autres caractéristiques de l'invention figurent dans des revendications dépendantes

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en élévation, simplifiée, d'une station offshore pour le transfert du gaz naturel liquéfié entre un navire de transport et un poste de stockage, qui est équipée d'un système de joint tournant selon l'invention, indiqué en A et visible à travers une fenêtre d'arrachement dans la colonne de la station offshore ;
- la figure 2 est une vue en coupe axiale d'un système de joint tournant A, tel qu'indiqué sur la figure 1 ;
- là figure 3 est une vue latérale du système de joint tournant selon la figure 2 ;
- la figure 4 est une vue en direction de la flèche IV de la figure 2 et,
- la figure 5 est une vue à plus grande échelle du détail 5 indiqué sur la figure 2.

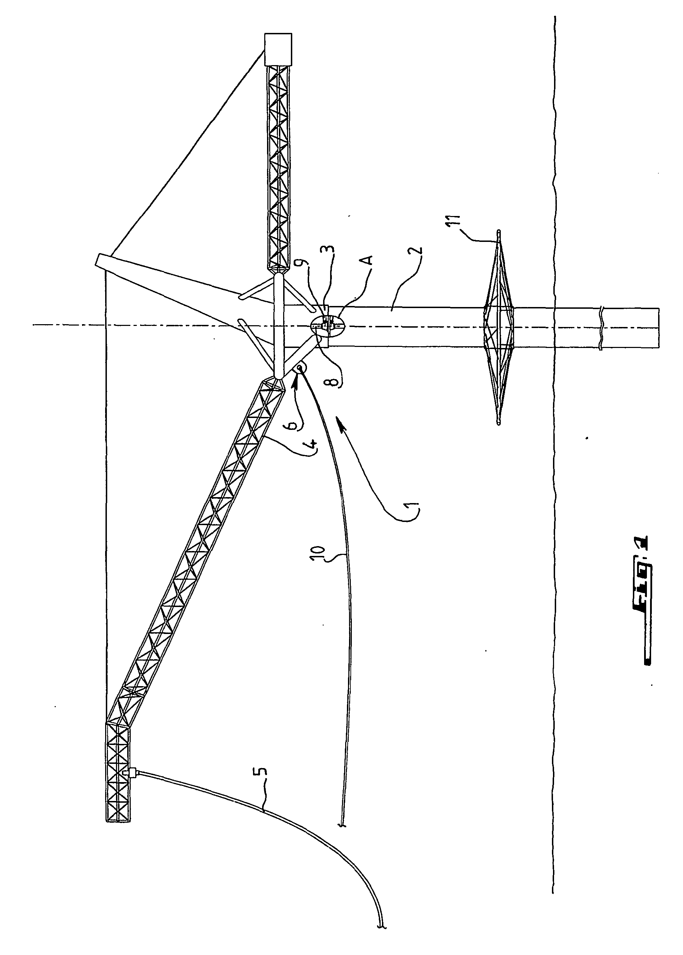

La figure 1 illustre, à titre d'exemple d'une application de l'invention, l'utilisation d'un système de joint tournant selon l'invention dans une station offshore pour le transfert du gaz naturel liquéfié d'un navire amaré à ce poste et une station de stockage éloignée de la station offshore.

La station offshore comporte une colonne 2 qui repose sur le fond marin et dont la tête 3 est susceptible de tourner autour de l'axe de la colonne. Cette tête porte une bôme 4 à l'extrémité libre de laquelle est suspendu un flexible de transfert du gaz naturel liquéfié et un autre flexible de retour de gaz dont les autres extrémités sont susceptibles d'être connectées au manifold du navire de transport. Sur la figure 1 on voit en 6 un anneau d'amarage du navire par l'intermédiaire d'une aussière 10 qui est solidaire de la tête tournante 3. En 11, la figure 1 montre une défense circulaire entourant la colonne. A l'intérieur de la colonne 2, au niveau de sa tête tournante 3 est monté, un système de joint tournant selon l'invention, désigné par la référence A. Ce système de joint est monté dans la tuyauterie de transfert du gaz naturel liquéfié 8 et le conduit 9 du retour de gaz.

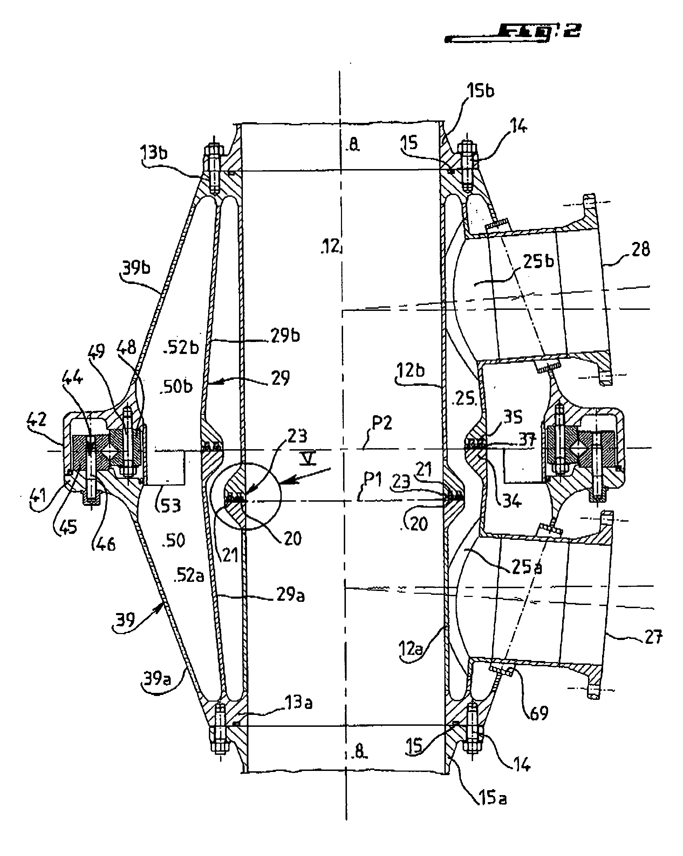

En se référant à la figure 2, on décrira ci-après plus en détail le système de joint tournant A selon l'invention.

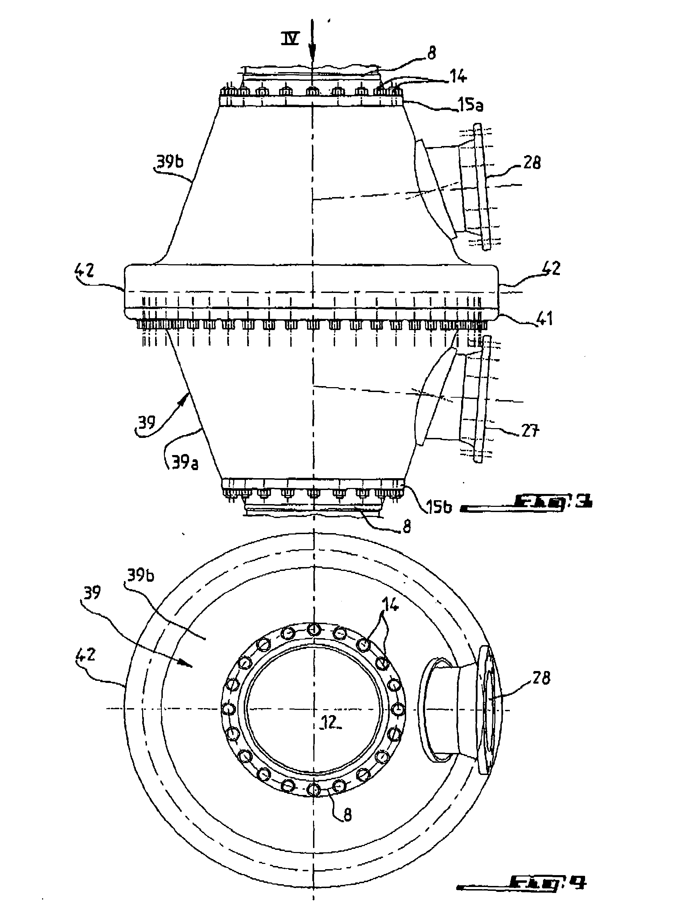

Le système de joint tournant A comprend un conduit central 12 pour le passage du gaz naturel liquéfié, qui est connecté en haut et en bas à la tuyauterie de transfert prévue à l'intérieur de la colonne 2 de la station offshore 1. La connexion du système de joint à la tuyauterie 8 se fait en haut et en bas à l'aide de vis 14, comme on le voit notamment sur les figures 3 et 4, avec interposition d'un joint annulaire d'étanchéité 15 entre les brides d'extrémité 13a, 13b, 15a, 15b du système de joint et des tuyauteries.

Le conduit central 12 comporte un tronçon de conduit inférieur 12a qui est monté fixe à l'intérieur de la colonne et un tronçon supérieur 12b qui est monté rotatif par rapport au tronçon inférieur fixe 12b. Entre les deux faces d'extrémité en regard respectivement 20 et 21 des tronçons fixe 12a et rotatif 12b est prévu un joint d'étanchéité 23 approrpié qui permet un mouvement annulaire important relatif des deux tronçons 12a et 12b. Autour du conduit central 12 est prévu, coaxialement à ce dernier, un espace annulaire 25, qui est délimité, radialement intérieurement par le conduit central 12 et, radialement extérieurement par une paroi 29. La paroi 29 s'étend entre les deux brides 13a, 13b. L'espace 25 qui est donc fermé en haut et en bas constitue le conduit de retour de gaz qui entre dans l'espace 25 par un embout de raccord latéral d'entrée 27 et sort de cet espace par un embout de raccord latéral de sortie 28.

Le conduit du retour de gaz, formé par l'espace 25 comporte une partie inférieure 25a qui entoure coaxialement le tronçon inférieure fixe 12a du conduit central 12 en étant solidaire de celui-ci, et une partie supérieure 25b qui entoure coaxialement le tronçon supérieur rotatif 12b du conduit central 12 en étant solidaire de ce tronçon. Par conséquent la partie supérieure 25b est rotative par rapport à la partie inférieure 25a du conduit-espace de retour de gaz 25. Entre les deux parties 25a et 25b, dans la paroi extérieure 29 st prévu, entre les faces d'extrémité en regard 34 et 35 un joint d'étanchéité 37 qui sera décrit plus en détail plus loin

Les deux joints d'étanchéité 23 et 37 appartenant respectivement au conduit central 12 de passage du gaz naturel liquéfié et au conduit de retour de gaz 25 se trouvent dans des plans parallèles mais axialement décalés. L'ensemble formé par le conduit central 12 et la paroi 29 l'entourant coaxialement en formant l'espace-conduit 25 est entouré d'une chemise extérieure 39 qui s'étend coaxialement entre les deux brides supérieure 13b et inférieure 13a et est divisé en deux portions, une portion inférieure fixe 39a et une partie rotative supérieure 39b. Les extrémités libres en regard 41, 42, en forme de brides, de la chemise 39 portent un dispositif de guidage en rotation en forme d'une couronne d'orientation à rouleaux, tel que par exemple un palier à rotation 44 qui est disposé par exemple dans le plan P2 du joint d'étanchéité 37 de l'espace-conduit 25 de retour de gaz. Le palier à roulement, qui forme un dispositif de guidage mécanique des deux parties du système de joint A peut être de toute nature connue appropriée, par exemple à galets ou à billes. Ces organes de révolution sont disposés entre une partie de palier 45 fixée par des vis 46 à l'extrémité en forme de bride 41 de la portion de chemise inférieure fixe 39a et une partie 48 retenue par des vis 49 à l'extrémité libre 42 de la portion de chemise supérieure rotative 39b.

Comme on le voit sur la figure 2, les portions de chemise 39a et 39b s'étendent à partir des brides inférieure et supérieure du système de joint jusqu'au plan P2 en s'écartant des portions de paroi respectivement 29a et 29b. Ainsi un espace annulaire 50 est délimité entre la paroi 29 et la chemise 39, qui comporte une portion inférieure 50a et supérieure 50b selon qu'il se trouve dans la partie fixe ou rotative du joint. Chaque espace partiel 50a et 50b est par exemple rempli d'un bloc en un matériau thermiquement isolant 52a, 52b, les deux faces en regard des deux blocs étant adaptées pour glisser l'une sur l'autre lors d'un mouvement angulaire de la partie mobile du joint par rapport à la partie fixe. Les faces en contact présentent un profil étagé.

Comme on le voit sur les figures, le palier à rotation unique qui équipe le système de joint tournant selon l'invention se trouve à la périphérie extérieure et peut donc travailler à une température proche de la température ambiante, donc non cryogénique.

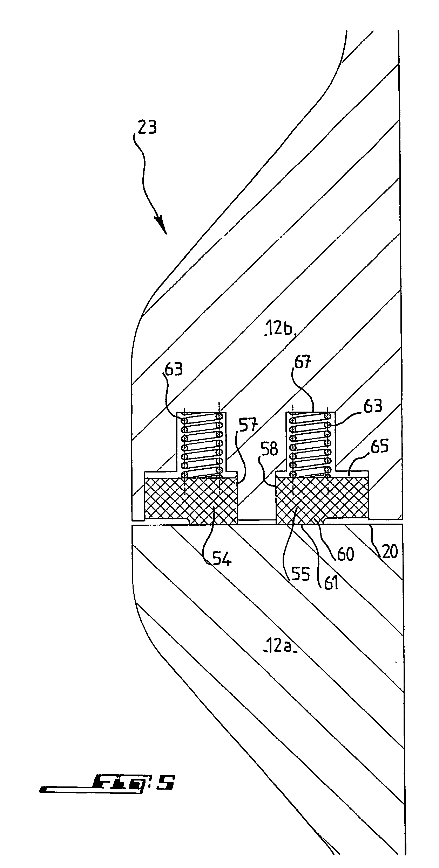

Les joints d'étanchéité 23, 37 sont configurés pour pouvoir absorber des grands mouvements radiaux et axiaux et peuvent être réalisés de la manière représentée sur la figure 5. Le joint représenté à titre d'exemple comporte deux anneau 54, 55 en un matériau approprié tel que par exemple, du Téflon, qui sont reçus chacun dans une rainure 57, 58 pratiquée dans la face frontale 21 du tronçon de conduit central 12b. Les rainures 57, 58 sont concentriques. Chaque anneau d'étanchéité 54, 55 présente sur sa face en regard de la face frontale 20 du tronçon de conduit central 12a une portion en saillie 60 dont la face frontale est serrée contre la face 20 sous l'effet d'un ressort 63 qui est interposé entre la face arrière 65 de l'anneau et le fond 67 de la rainure 57, 58 de réception de l'anneau d'étanchéité.

En se référant à la figure 2, on constate encore que les embouts cylindriques de raccord d'entrée et de sortie 27, 28 du conduit de retour de gaz passent à travers des ouvertures circulaires 69 pratiquées dans l'enveloppe extérieure 39.

A titre d'exemple, la structure du joint tournant 1 selon l'invention est en acier inoxidable du type AISI 316 L et peut être disposée avec un axe de rotation vertical ou horizontal.

Bien entendu de diverses modifications peuvent être apportées au joint tel que représenté et décrit, à condition de respecter les caractéristiques essentielles de celui-ci, à savoir un seul dispositif de guidage en rotation pour les lignes de passage du gaz naturel liquéfié et le retour vapeur, et la structure intégrée compacte dans laquelle les parties fixe et rotative du conduit central de passage du liquide cryogénique et du conduit de retour de vapeur sont disposés respectivement coaxialement de façon que la paroi du conduit central 12 constitue la paroi radialement interne du conduit de retour vapeur 25.

Le système de joint tournant selon l'invention présente donc les avantages d'une paroi commune des dispositifs de joints coaxiaux, rendu possible par une architecture fusionnée sous forme d'un module unique homogène comportant un seul mécanisme "chaud" et ainsi "standard" qui est fiable dans le temps et peut résister aux efforts des tuyauteries. La paroi commune permet de ne pas placer d'isolant thermique entre le gaz naturel liquéfié et le gaz vapeur et ceci ni en circuit gaz ni en circuit vapeur.

## Revendications

1. Système de joint tournant destiné à être monté dans une ligne de transfert d'un liquide cryogénique, tel que du gaz naturel liquéfié, et de retour de gaz froid lié au transfert du liquide cryogénique, du type comprenant un dispositif de joint tournant pour le passage du liquide cryogénique et un dispositif de joint tournante pour le retour du gaz froid, chaque dispositif comprenant un conduit pourvu d'une partie de conduit fixe et une partie de conduit rotative par rapport à la partie de conduit fixe et des moyens de guidage en rotation interposés entre les deux parties de conduit, **caractérisé en ce que** le dispositif de joint tournant pour le passage du retour de gaz est intégré au dispositif de joint tournant pour le passage du liquide cryogénique, et
ce qu'il comprend un seul et même dispositif de guidage en rotation, tel qu'un palier à roulement (44) pour les deux dispositifs.

2. système selon la revendication 1, **caractérisé en ce qu'**il comprend un conduit central (12) de passage du liquide cryogénique et un conduit annulaire de retour de gaz froid (25) entourant coaxialement le conduit central (12) et une chemise extérieure (39) coaxiale au conduit central, entre deux brides d'extrémité (13a, 13b), **en ce que** les conduits central (12) et annulaire (29) et la chemise extérieure (39) sont réalisés en deux tronçons axialement alignés, rotatives l'un par rapport à l'autre et **en ce que** le palier à rotation (44) est placé entre les deux faces en regard des deux parties de la chemise tandis qu'un joint d'étanchéité (23, 37) est disposé entre les faces en regard des deux tronçons des conduits central et annulaire, le palier à roulement et les joints d'étanchéité étant disposés dans des plans (P1, P2) au moins parallèles.

3. Système selon la revendication 2, **caractérisé en ce que** l'espace annulaire (50) délimité entre le conduit annulaire (29) et la chemise extérieure (39) est rempli d'un matériau thermiquement isolant avantageusement configuré en deux blocs (52a, 52b) disposés chacun dans une des deux parties fixe et rotative précitées du joint, les deux blocs (52a, 52b) permettant un mouvement rotatif l'un par rapport à l'autre.

4. Système selon l'une des revendications 1 à 3, **caractérisé en ce que** la paroi radialement interne du conduit annulaire (29) de retour de gaz froid est formée par la paroi du conduit central (12), du passage du liquide cryogénique.

5. Système selon la revendication 4, **caractérisé en ce qu'**il comporte deux joints d'échanchéité (23, 37) disposés l'un (23) dans le conduit central (12) et l'autre (27) dans la paroi extérieure (29) de délimitation du conduit annulaire.

6. Système selon la revendication 5, **caractérisé en ce qu'**un joint d'étanchéité (23, 37) comprend deux anneaux en un matériau d'étanchéité, tel que du Téflon, qui sont placés concentriquement dans l'une des faces en regard des parties correspondantes du conduit et sont pressés contre l'autre face sous l'effet d'un organe tel qu'un ressort.

7. Système selon l'une des revendications 3 à 6, **caractérisé en ce que** le conduit central (12) et le conduit annulaire (29) qui sont coaxiaux ont une paroi commune.

## Claims

1. A swivel joint system intended to be mounted in a transfer line for a cryogenic liquid, such as liquefied natural gas, and for returning cold gas connected to the transfer of the cryogenic liquid, of the type comprising a swivel joint device for the passage of the cryogenic liquid and a swivel joint device for returning the cold gas, each device comprising a conduit provided with a stationary conduit portion and a conduit portion rotating relative to the stationary conduit portion and rotational guiding means inserted between the two conduit portions, **characterized in that** the swivel joint device for the passage of the gas return is integrated into the swivel joint device for the passage of the cryogenic liquid, and **in that** it comprises a single and same rotational guiding device, such as an antifriction bearing (44) for the two devices.

2. The system according to claim 1, **characterized in that** it comprises a central conduit (12) for the passage of the cryogenic liquid and an annular cold gas return conduit (25) coaxially surrounding the central conduit (12) and an outer sleeve (39) coaxial to the central conduit, between two end flanges (13a, 13b), **in that** the central (12) and annular (29) conduits and the outer sleeve (39) are made in two axially aligned sections, rotating relative to one another, and **in that** the antifriction bearing (44) is placed between the two opposite surfaces of the two portions of the sleeve while a sealing device (23, 37) is positioned between the opposite surfaces of the two sections of the central and annular conduits, the antifriction bearing and the sealing devices being arranged in planes (P1, P2) that are at least parallel.

3. The system according to claim 2, **characterized in that** the annular space (50) delimited between the annular conduit (29) and the outer sleeve (39) is filled with a thermally insulating material advantageously configured in two blocks (52a, 52b) each positioned in one of the two aforementioned stationary and rotary portions of the sealing device, the two blocks (52a, 52b) allowing a rotational movement relative to one another.

4. The system according to one of claims 1 to 3, **characterized in that** the radially inner wall of the annular cold gas return conduit (29) is formed by the wall of the central conduit (12), for the passage of the cryogenic liquid.

5. The system according to claim 4, **characterized in that** it includes two sealing devices (23, 37) one of which (23) is positioned in the central conduit (12) and the other of which (27) is positioned in the outer wall (29) delimiting the annular conduit.

6. The system according to claim 5, **characterized in that** a sealing device (23, 37) includes two rings made from a sealing material, such as Teflon, which are placed concentrically in one of the opposite surfaces of the corresponding portions of the conduit and are pressed against the other surface under the effect of a member such as a spring.

7. The system according to one of claims 3 to 6, **characterized in that** the central conduit (12) and the annular conduit (29) that are coaxial have a shared wall.

## Patentansprüche

1. Drehverbindungssystem, dazu ausgelegt, in einer Linie zur Übertragung einer cryogenen Flüssigkeit wie z.B. verflüssigtem Erdgas und zur Rückführung von kaltem Gas, verbunden mit der Übertragung der cryogenen Flüssigkeit, montiert zu sein, des Typs umfassend eine Drehverbindungsvorrichtung für den Durchgang der cryogenen Flüssigkeit und eine Drehverbindungsvorrichtung für die Rückführung des kalten Gases, wobei jede Vorrichtung einen Kanal umfasst, der mit einem festen Kanalteil und einem drehenden Kanalteil mit Bezug auf den festen Kanalteil und Mitteln zur drehenden Führung versehen ist, die zwischen den zwei Kanalteilen angebracht sind, **dadurch gekennzeichnet, dass** die Drehverbindungsvorrichtung für den Durchgang der Rückführung des Gases in die Drehverbindungsvorrichtung für den Durchgang der cryogenen Flüssigkeit integriert ist, und dadurch, dass sie eine einzige und gleiche Vorrichtung zur drehenden Führung umfasst, wie z.B. ein Wälzlager (44) für die zwei Vorrichtungen.

2. System nach Anspruch 1, **dadurch gekennzeichnet, dass** es einen zentralen Kanal (12) zum Durchgang der cryogenen Flüssigkeit und einen ringförmigen Kanal zur Rückführung des kalten Gases (25) umfasst, koaxial umgebend den zentralen Kanal (12) und eine äußere Umhüllung (39), koaxial zum zentralen Kanal, zwischen zwei Endflanschen (13a, 13b), und dadurch, dass der zentrale (12) und der ringförmige (29) Kanal und die äußere Umhüllung (39) in zwei axial ausgerichteten Stücken durchgeführt sind, die in Bezug aufeinander drehbar sind, und dadurch, dass das Wälzlager (44) zwischen den zwei Seiten gegenüber den zwei Teilen der Umhüllung angebracht ist, während eine Dichtung (23, 37) zwischen den Seiten gegenüber den zwei Stücken des zentralen und des ringförmigen Kanals angebracht sind, wobei das Wälzlager und die Dichtungen auf mindestens parallelen Ebenen (P1, P2) angebracht sind.

3. System nach Anspruch 2, **dadurch gekennzeichnet, dass** der ringförmige Raum (50), der zwischen dem ringförmigen Kanal (29) und der äußeren Umhüllung (39) begrenzt ist, mit einem thermisch isolierenden Material gefüllt ist, vorteilhafterweise konfiguriert in zwei Blöcken (52a, 52b), die jeweils in einem der zwei oben angegebenen festen und drehenden Teile der Verbindung angebracht sind, wobei die zwei Blöcke (52a, 52b) eine Drehbewegung des einen mit Bezug auf den anderen ermöglichen.

4. System nach einem der Ansprüche 1 bis 3, **dadurch gekennzeichnet, dass** die radiale Innenwand des ringförmigen Kanals (29) zur Rückführung des kalten Gases durch die Wand des zentralen Kanals (12) des Durchgangs der cryogenen Flüssigkeit gebildet ist.

5. System nach Anspruch 4, **dadurch gekennzeichnet, dass** es zwei Dichtungen (23, 37) umfasst, wobei die eine (23) im zentralen Kanal (12) und die andere (27) in der Außenwand (29) zur Begrenzung des ringförmigen Kanals angebracht ist.

6. System nach Anspruch 5, **dadurch gekennzeichnet, dass** eine Dichtung (23, 37) zwei Ringe aus einem Dichtungsmaterial wie z.B. Teflon umfasst, die konzentrisch in einer der Seiten gegenüber den entsprechenden Teilen des Kanals angebracht sind und gegen die andere Seite unter der Einwirkung eines Organs wie z.B. einer Feder gedrückt werden.

7. System nach einem der Ansprüche 3 bis 6, **dadurch gekennzeichnet, dass** der zentrale Kanal (12) und der ringförmige Kanal (29), die koaxial sind, eine gemeinsame Wand aufweisen.
